# EUROPÄISCHE PATENTSCHRIFT

(11) **EP 1 248 715 B1**
(45) Veröffentlichungstag und Bekanntmachung des Hinweises auf die Patenterteilung: **17.12.2003**
(21) Anmeldenummer: 01982169.3
(22) Anmeldetag: 28.09.2001
(51) Int. Cl.: B60R 21/01, G01M 7/08, G01M 17/007, G05B 17/02

(54) **VORRICHTUNG UND VERFAHREN ZUR PRÜFUNG DES AUSLÖSEVERHALTENS VON RÜCKHALTEMITTELN IN EINEM KFZ**
DEVICE AND METHOD FOR TESTING THE ACTIVATION BEHAVIOR OF RESTRAINING MEANS IN A MOTOR VEHICLE
DISPOSITIF ET PROCEDE POUR L'ESSAI DU COMPORTEMENT AU DECLENCHEMENT DE MOYENS DE RETENUE DANS UN VEHICULE A MOTEUR

(30) Priorität: 07.11.2000 DE 10055088
(43) Veröffentlichungstag der Anmeldung: 16.10.2002
(73) Patentinhaber: ROBERT BOSCH GMBH, 70442 Stuttgart (DE)
(72) Erfinder: SCHWEIZER, Martin, 71665 Kleinglattbach (DE); WEISSFLOG, Peter, 70563 Stuttgart (DE)
(86) Internationale Anmeldenummer: DE0103741
(87) Internationale Veröffentlichungsnummer: WO02038421

(56) Entgegenhaltungen:
- DE-A- 4 222 057
- DE-A- 19 711 734

## Beschreibung

Die Erfindung betrifft eine Vorrichtung und ein Verfahren zur Prüfung des Auslöseverhaltens von Rückhaltemitteln in einem Kraftfahrzeug, wie z.B. Airbags und Gurtstraffern, wobei die Rückhaltemittel über ein Steuergerät ausgelöst werden.

Aus DE19711734A ist eine Prüfvorrichtung gemäß dem oberbegriff des Anspruchs 1 bekannt.

Bei modemen Steuergeräten dieser Art hängt das Auslöseverhalten für die einzelnen im Kraftfahrzeug vorhandenen Rückhaltemittel nicht nur von der Art der Beschleunigung ab, der das Kraftfahrzeug und damit das Steuergerät ausgesetzt ist, sondern auch von anderen Zustandsdaten, wie z.B. der Geschwindigkeit des Kraftfahrzeugs, der Position und ggf. der Gewichtsklasse des oder der Insassen, ob ein Kindersitz vorhanden ist oder nicht, ob ein Gurtschloss gesteckt ist oder nicht, etc.. Diese Zustandsdaten werden in der Regel mit Hilfe geeigneter Sensoren als Peripheriezustand erfasst und an das Steuergerät übermittelt, so dass der aktuelle Peripheriezustand bei der Auslösung der einzelnen Rückhaltemittel berücksichtigt werden kann. In Verbindung mit den Variationsmöglichkeiten bei der Ausstattung eines Kraftfahrzeugs mit Rückhaltemitteln ergibt sich so eine Vielzahl von unterschiedlichen Auslösesituationen.

Bei der Programmierung des Steuergeräts wird die vom Kunden gewünschte Ausstattung des Kraftfahrzeugs mit Rückhaltemitteln berücksichtigt. Entsprechend ist die Steuergeräte-Software in der Regel modular aufgebaut und wird bei der Erstellung in einer synthetischen Umgebung ausschließlich modulweise geprüft.

Dieses Vorgehen erweist sich in der Praxis als problematisch, da beim Auslösen der einzelnen Rückhaltemittel nicht nur eine immer größer werdende Zahl von Zustandsdaten zu berücksichtigen ist, die den aktuellen Peripheriezustand beschreiben, sondern auch die Wechselwirkungen, die beim Auslösen zwischen den einzelnen Rückhaltemitteln auftreten. Mit zunehmender Anzahl von Rückhaltemitteln spielen diese Wechselwirkungen nämlich eine immer größer werdende Rolle.

### Vorteile der Erfindung

Mit der vorliegenden Erfindung werden nun eine Vorrichtung und ein Verfahren vorgeschlagen, die eine systematische Prüfung des Auslöseverhaltens von Rückhaltemitteln in einem Kraftfahrzeug unter möglichst realen Bedingungen ermöglichen.

Dazu umfasst die erfindungsgemäße Vorrichtung einen an das Steuergerät anschließbaren Umgebungssimulator zur Vorgabe definierter Peripheriezustände, eine Beschleunigungseinrichtung zum Beschleunigen des Steuergeräts, Erfassungsmittel zum Aufzeichnen des Auslöseverhaltens der Rückhaltemittel beim Beschleunigen des Steuergeräts und Auswertemittel zum Auswerten des aufgezeichneten Auslöseverhaltens.

Entsprechend dem erfindungsgemäßen Verfahren wird das Steuergerät zunächst für eine bestimmte Konstellation von Rückhaltemitteln programmiert. Dem Steuergerät wird dann mit Hilfe eines Umgebungssimulators ein definierter Peripheriezustand vorgegeben. Danach wird das Steuergerät beschleunigt, so dass ein Auslösen der Rückhaltemittel provoziert wird. Das Auslöseverhalten der Rückhaltemittel bei dem vorliegenden Peripheriezustand wird aufgezeichnet und ausgewertet.

Es ist erkannt worden, dass die Wechselwirkungen, die beim Auslösen zwischen den einzelnen Rückhaltemitteln auftreten, nur bei realen Belastungsbedingungen, d.h. bei einer realen Beschleunigung des Steuergeräts und beim tatsächlichen Auslösen der Rückhaltemittel, erfasst werden können. Ferner ist erkannt worden, dass im Gegensatz zu diesen Wechselwirkungen die verschiedenen in Realität auftretenden Peripheriezustände einfach simuliert werden können, indem das Steuergerät mit entsprechenden Zustandsdaten versorgt wird. Erfindungsgemäß wird daher vorgeschlagen, das Auslöseverhalten der einzelnen Rückhaltemittel eines Kraftfahrzeugs einerseits unter realen Belastungsbedingungen aber andererseits bei lediglich simulierten Peripheriezuständen automatisch und systematisch durchzutesten.

Grundsätzlich gibt es verschiedene Möglichkeiten für die Realisierung der erfindungsgemäßen Vorrichtung bzw. des erfindungsgemäßen Verfahrens.

In einer vorteilhaften Ausgestaltung umfasst die erfindungsgemäße Vorrichtung einen an das Steuergerät angeschlossenen Steuer-PC, über den sich das Steuergerät programmieren lässt. Auf diese Weise können dem Steuergerät einfach bestimmte Konstellationen von Rückhaltemitteln - Ausstattungsvarianten - vorgegeben werden.

Außerdem könnte der Steuer-PC noch mit dem Umgebungssimulator verbunden sein, was sich insbesondere im Hinblick auf eine automatische und systematische Vorgabe von unterschiedlichen definierten Peripheriezuständen als vorteilhaft erweist.

Schließlich könnte der Steuer-PC noch die Auswertung des aufgezeichneten Auslöseverhaltens unterstützen.

### Zeichnung

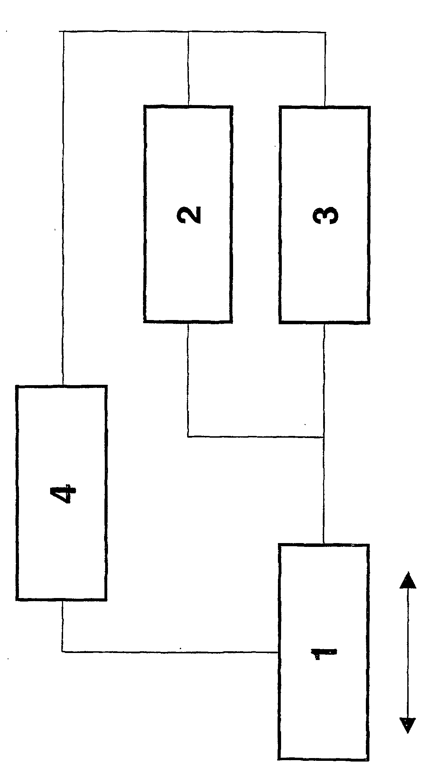

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnung verwiesen.

Die einzige Figur zeigt das Blockschaltbild einer erfindungsgemäßen Vorrichtung zur Prüfung des Auslöseverhaltens von Rückhaltemitteln in einem Kraftfahrzeug zusammen mit dem Steuergerät, über das die Rückhaltemittel ausgelöst werden. Beschreibung des Ausführungsbeispiels

Die in der einzigen Figur als Blockschaltbild dargestellte Vorrichtung dient zur Prüfung des Auslöseverhaltens von Rückhaltemitteln in einem Kraftfahrzeug, die über ein gemeinsames Steuergerät 1 ausgelöst werden.

An das Steuergerät 1 ist ein Umgebungssimulator 2 angeschlossen, der zur Vorgabe definierter Peripheriezustände dient. Der Umgebungssimulator 2 liefert dem Steuergerät 1 definierte Zustandsdaten, die im normalen Fahrbetrieb von entsprechenden Sensoren erfasst und dem Steuergerät zugeführt werden. Der Umgebungssimulator 2 kann dem Steuergerät also systematisch alle möglichen Peripheriezustände und auch alle möglichen Fehlerzustände vorgeben.

Das Steuergerät 1 selbst ist auf einer Beschleunigungseinrichtung - hier nicht dargestellt - montiert. Mit Hilfe der Beschleunigungseinrichtung wird das Steuergerät 1 beschleunigt, um ein Auslösen der Rückhaltemittel zu provozieren.

Zum Aufzeichnen des Auslöseverhaltens der Rückhaltemittel beim Beschleunigen des Steuergeräts 1, d.h. zum Aufzeichnen des Verhaltens der entsprechenden Zündkreise, ist eine Zündkreisbox als Erfassungsmittel 3 an das Steuergerät 1 angeschlossen.

Das so aufgezeichnete Auslöseverhalten der Rückhaltemittel wird hier mit Hilfe eines Steuer-PCs 4 ausgewertet, der zu diesem Zweck an die Zündkreisbox 3 angeschlossen ist. Bei der Auswertung können das tatsächlich beobachtete Auslöseverhalten und die Auslösezeiten mit entsprechenden Vorgaben verglichen werden. Der Steuer-PC 4 ist außerdem über eine Diagnoseleitung mit dem Steuergerät 1 verbunden, so dass sich das Steuergerät 1 über den Steuer-PC 4 programmieren lässt. Insbesondere kann mit Hilfe des Steuer-PCs 4 eine bestimmte Konstellation von Rückhaltemitteln, d.h. die gewünschte Ausstattung mit Rückhaltemitteln, vorgegeben werden. Außerdem stellt der Steuer-PC 4 den Umgebungssimulator 2 in einen definierten Zustand und ist dazu mit dem Umgebungssimulator 2 verbunden. Auf diese Weise lassen sich einfach, automatisch und systematisch definierte Peripheriezustände für die Prüfung des Auslöseverhaltens der Rückhaltemittel vorgeben.

Abschließend sei nochmals darauf hingewiesen, dass bei dem erfindungsgemäßen Verfahren zur Prüfung des Auslöseverhaltens von Rückhaltemitteln in einem Kraftfahrzeug das tatsächliche Auslöseverhalten unter realen Belastungsbedingungen durch ferngesteuertes Stellen der Geräte- Peripherie automatisch durchgetestet wird. Der Vorteil dieser gesamtheitlichen Prüfung liegt darin, dass die Prüfung am realen Steuergerät unter Echtzeitbedingungen erfolgt und unter Einbeziehung des realen Signalpfades sowohl auf der Seite des im Steuergerät 1 integrierten Beschleunigungssensors als auch auf der Seite der Peripherie-Geräte.

## Patentansprüche

1. Vorrichtung zur Prüfung des Auslöseverhaltens von Rückhaltemitteln in einem Kraftfahrzeug, wobei die Rückhaltemittel über ein Steuergerät (1) ausgelöst werden, umfassend
- einen an das Steuergerät (1) anschließbaren Umgebungssimulator (2) zur Vorgabe definierter Peripheriezustände,
- Auswertemittel zum Auswerten des aufgezeichneten Auslöseverhaltens,
**dadurch gekennzeichnet, daß** die Vorrichtung weiterhin
- eine Beschleunigungseinrichtung zum Beschleunigen des Steuergeräts (1), und
- Erfassungsmittel (3) zum Aufzeichnen des Auslöseverhaltens der Rückhaltemittel beim Beschleunigen des Steuergeräts (1) umfaßt.

2. Vorrichtung nach Anspruch 1, **dadurch gekennzeichnet, dass** ein Steuer-PC (4) zum Programmieren des Steuergeräts (1), insbesondere zum Vorgeben einer bestimmten Konstellation von Rückhaltemitteln, an das Steuergerät (1) angeschlossen ist.

3. Vorrichtung nach Anspruch 2, **dadurch gekennzeichnet, dass** der Steuer-PC (4) über eine Diagnoseleitung mit dem Steuergerät (1) verbunden ist.

4. Vorrichtung nach einem der Ansprüche 2 oder 3, **dadurch gekennzeichnet, dass** der Steuer-PC (4) zur Vorgabe definierter Peripheriezustände mit dem Umgebungssimulator (2) verbunden ist.

5. Vorrichtung nach einem der Ansprüche 2 bis 4, **dadurch gekennzeichnet, dass** der Steuer-PC (4) das aufgezeichnete Auslöseverhalten auswertet.

6. Verfahren zur Prüfung des Auslöseverhaltens von Rückhaltemitteln in einem Kraftfahrzeug, wobei die Rückhaltemittel über ein Steuergerät (1) ausgelöst werden, wobei
- das Steuergerät (1) für eine bestimmte Konstellation von Rückhaltemitteln programmiert wird,
- dem Steuergerät (1) mit Hilfe eines Umgebungssimulators (2) ein definierter Peripheriezustand vorgegeben wird,
- das Auslöseverhalten der Rückhaltemittel bei dem vorliegenden Peripheriezustand aufgezeichnet und ausgewertet wird,
**dadurch gekennzeichnet,**
**dass** das Steuergerät (1) beschleunigt wird, so dass ein Auslösen der Rückhaltemittel provoziert wird.

## Claims

1. Device for testing the activation behaviour of restraining means in a motor vehicle, the restraining means being activated by means of a controller (1), comprising
- a surroundings simulator (2), which can be connected to the controller (1), for specifying defined peripheral states,
- evaluation means for evaluating the recorded activation behaviour, **characterized in that** the device also comprises
- an acceleration apparatus for accelerating the controller (1) and
- sensing means (3) for recording the activation behaviour of the restraining means when the controller (1) accelerates.

2. Device according to Claim 1, **characterized in that** a control PC (4) for programming the controller (1), in particular for specifying a particular constellation of restraining means, is connected to the controller (1).

3. Device according to Claim 2, **characterized in that** the control PC (4) is connected to the controller (1) via a diagnostic line.

4. Device according to one of Claims 2 or 3, **characterized in that** the control PC (4) is connected to the surroundings simulator (2) in order to specify defined peripheral states.

5. Device according to one of Claims 2 to 4, **characterized in that** the control PC (4) evaluates the recorded activation behaviour.

6. Method for testing the activation behaviour of restraining means in a motor vehicle, the restraining means being activated by means of a controller (1),
- the controller (1) being programmed for a particular constellation of restraining means,
- a defined peripheral state being specified to the controller (1) using a surroundings simulator (2),
- the activation behaviour of the restraining means being recorded and evaluated when the peripheral state is present, **characterized in that** the controller (1) is accelerated so that activation of the restraining means is brought about.

## Revendications

1. Dispositif pour l'essai du comportement au déclenchement de moyens de retenue dans un véhicule automobile, les moyens de retenue étant déclenchés par un organe de commande (1), comprenant
- un simulateur d'environnement (2) pouvant être raccordé à l'organe de commande (1) pour indiquer des états périphériques définis,
- des moyens d'analyse pour analyser le comportement au déclenchement enregistré,
**caractérisé en ce que**
le dispositif comprend en outre,
- une installation d'accélération pour l'accélération de l'organe de commande (1), et
- des moyens de saisie (3) pour enregistrer le comportement au déclenchement des moyens de retenue lors de l'accélération de l'organe de commande.

2. Dispositif selon la revendication 1,
**caractérisé en ce qu'**
un PC de commande (4) est raccordé à l'organe de commande (1) pour programmer cet organe de commande (1), notamment pour indiquer une constellation déterminée de moyens de retenue.

3. Dispositif selon la revendication 2,
**caractérisé en ce que**
le PC de commande (4) est relié à l'organe de commande (1) par une ligne de diagnostic.

4. Dispositif selon l'une des revendications 2 ou 3,
**caractérisé en ce que**
le PC de commande (4) est relié au simulateur d'environnement (2) pour indiquer des états périphériques définis.

5. Dispositif selon l'une des revendications 2 à 4,
**caractérisé en ce que**
le PC de commande (4) analyse le comportement au déclenchement enregistré.

6. Procédé pour l'essai du comportement au déclenchement de moyens de retenue dans un véhicule automobile, les moyens de retenue étant déclenchés par un organe de commande (1),
- l'organe de commande (1) étant programmé pour une constellation de moyens de retenue déterminée,
- l'organe de commande (1) recevant un état périphérique défini à l'aide d'un simulateur d'environnement,
- le comportement au déclenchement des moyens de retenue étant enregistré et analysé à l'état périphérique présent,
**caractérisé en ce que**
l'organe de commande (1) est accéléré pour provoquer un déclenchement des moyens de retenue.
